# EUROPEAN PATENT APPLICATION

(11) **EP 4 835 259 A2**
(43) Date of publication of application: **04.11.2026**
(21) Application number: 26169515.9
(22) Date of filing: 31.03.2026
(51) Int. Cl.: F01D 15/10, F02C 7/12, F02C 7/32, F02C 7/18

(54) **ELECTRIC MACHINE COOLING SYSTEMS FOR GAS TURBINE ENGINES**

(30) Priority: 11.04.2025 PL 45177625; 16.05.2025 US 202519209961
(71) Applicant: General Electric Company, Evendale, OH 45215 (US); GE Aerospace Poland Sp. z o.o., 02-256 Warsaw (PL)
(72) Inventor: OWOEYE, Eyitayo James, Niskayuna, 12309 (US); PAZINSKI, Adam Tomasz, 02-256 Warsaw (PL)
(74) Representative: Openshaw & Co.

(57) **Abstract**

A gas turbine engine includes a turbomachine having a compressor section, a combustion section, and a turbine section; a low pressure shaft coupled to a portion of the compressor section and the turbine section; a high pressure shaft coupled to another portion of the compressor section and the turbine section; an electric machine operably coupled to the low pressure shaft or the high pressure shaft; and a cooling system thermally coupled to the electric machine. The cooling system defines a coolant supply factor (f_{coolant}). The low pressure shaft defines a first rotational speed (N1) and the high pressure shaft defines a second rotational speed (N2). The gas turbine engine defines an engine mass power density (PD_{engine}). The electric machine defines an electric machine power density (PD_{EM}), an electric machine mounting location factor (f_{EM_location}), and an electric machine cooling factor (EMCF).

## Description

### FIELD

The present disclosure relates to gas turbine engines, and more particularly to electric machine cooling systems for gas turbine engines.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustion section, a turbine section, and an exhaust section.

Incorporating an electrical machine (e.g., an electrical generator) into a propulsion engine to generate electrical power from mechanical energy generated by the propulsion engine enhances the capabilities of aircraft. When generating the electrical power, heat is generated from electrical resistance of the currents of the electrical power. This generated heat further increases the electrical resistance of components of the electrical machine, thereby reducing the amount of electrical power generated by the electrical machine. Dissipating this generated heat can improve electrical power generation.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1A is a schematic cross-sectional view of a gas turbine engine according to an example embodiment of the present disclosure.
FIG. 1B is a schematic cross-sectional view of a gas turbine engine according to an example embodiment of the present disclosure.
FIG. 2A is a schematic cross-sectional view of a gas turbine engine according to an example embodiment of the present disclosure.
FIG. 2B is a schematic cross-sectional view of a gas turbine engine according to an example embodiment of the present disclosure.
FIG. 3 is a front schematic view of an electric machine of the gas turbine engine of FIGS. 1A-2B according to an example embodiment of the present disclosure.
FIG. 4 is a schematic diagram of a cooling system for an electric machine of the gas turbine engine of FIGS. 1A-2B according to an example embodiment of the present disclosure.
FIG. 5 is a side cross-sectional view of the electric machine of FIG. 3 according to an example embodiment of the present disclosure.
FIG. 6 is a graphical representation of an electric machine cooling factor according to an example embodiment of the present disclosure.
FIG. 7 provides a table listing values for various electric machines and electric machine cooling systems for different example gas turbine engines in accordance with an exemplary aspect of the present disclosure.
FIG. 8 is a schematic diagram of a cooling system for an electric machine of the gas turbine engine of FIGS. 1A-2B according to an example embodiment of the present disclosure.
FIG. 9 is a schematic diagram of a cooling system for an electric machine of the gas turbine engine of FIGS. 1A-2B according to an example embodiment of the present disclosure.
FIG. 10 is a schematic diagram of a cooling system for an electric machine of the gas turbine engine of FIGS. 1A-2B according to an example embodiment of the present disclosure.
FIG. 11 is a schematic diagram of a cooling system for an electric machine of the gas turbine engine of FIGS. 1A-2B according to an example embodiment of the present disclosure.
FIG. 12 is a side cross-sectional view of the electric machine of FIG. 3 according to an example embodiment of the present disclosure.
FIG. 13 is a side cross-sectional view of the electric machine of FIG. 3 according to an example embodiment of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section refers to a section including one or more of a deflagrative combustion assembly, a rotating detonation combustion assembly, a pulse detonation combustion assembly, or other appropriate heat addition assembly. In certain example embodiments, the combustion section includes an annular combustor, a can combustor, a cannular combustor, a trapped vortex combustor (TVC), or other appropriate combustion system, or combinations thereof.

The terms "low" and "high," or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

As used herein, the term "rated speed" with reference to a gas turbine engine refers to a maximum rated speed of the gas turbine engine. For example, in an engine certified by the Federal Aviation Administration ("FAA"), the rated speed refers to a rotation speed of the engine during the highest sustainable and continuous power operation in the certification documents, such as a rotational speed of the gas turbine engine when operating under a maximum continuous operation.

As used herein, the term "rated thrust" refers to a maximum rated thrust from a certification document when operating under a maximum continuous operation, such as in a Federal Aviation Administration ("FAA")-type certificate data sheet.

As used herein, the term "fan tip speed" as it relates to a plurality of fan blades of a fan, refers to a speed of an outer tip of a fan blade of the plurality of fan blades along a radial direction during operation of the fan. As will be appreciated, fan tip speed is calculated by multiplying a rotational speed of the plurality of fan blades by a radius of the plurality of fan blades.

The term "standard day operating condition" refers to ambient conditions of sea level altitude, 59 degrees Fahrenheit, and 60 percent relative humidity.

The term "propulsive efficiency" refers to an efficiency with which the energy contained in an engine's fuel is converted into kinetic energy for the vehicle incorporating the engine, to accelerate it, or to replace losses due to aerodynamic drag or gravity.

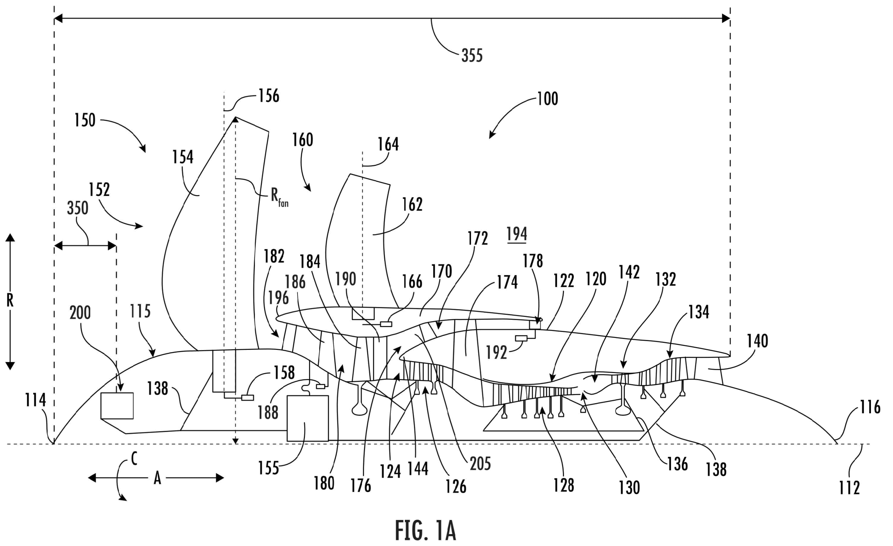

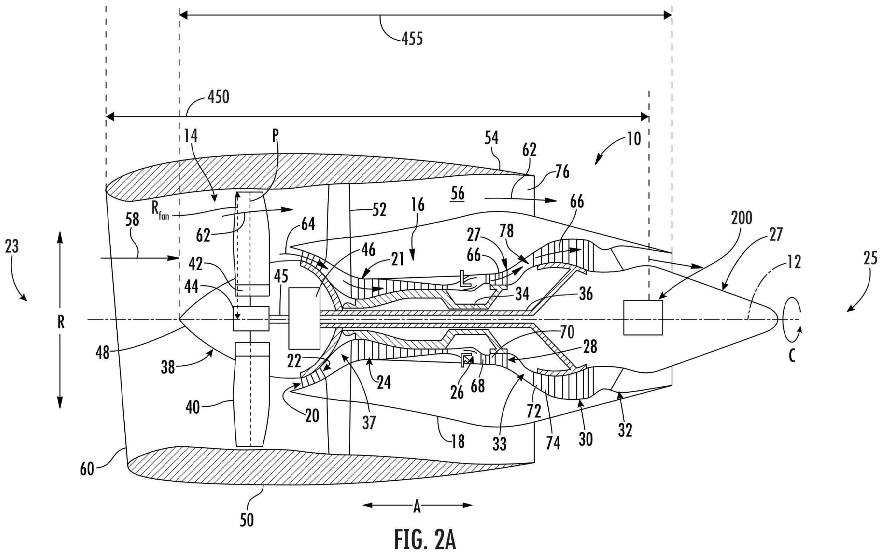

The term "bypass passage" refers generally to a passage with an airflow from a fan of the gas turbine engine that flows over an upstream-most inlet to a turbomachine of the gas turbine engine. In a ducted gas turbine engine, the bypass passage is the passage defined between an outer nacelle (surrounding the fan of the gas turbine engine) and one or more cowls inward of the outer nacelle (e.g., a fan cowl, a core cowl or both if both are present; see, e.g., FIGS. 2A-2B). In an unducted gas turbine engine, the bypass passage refers to an open sided passage (e.g., not explicitly defined by structure such as an outer nacelle) where airflow from the fan passes over an upstream-most inlet to the turbomachine (e.g., engine inlet 182 to inlet duct 180 in FIGS. 1A-1B), defined at least in part by a primary fan outer fan area, which refers to an area defined by an annulus representing a portion of the fan located outward of an inlet splitter at the upstream-most inlet to the turbomachine (e.g., inlet splitter 196 of the fan cowl 170 in the embodiment of FIGS. 1A-1B). An airflow through the bypass passage of a ducted or an unducted engine refers to all of the airflow from the fan that is not provided through the upstream-most inlet to the turbomachine.

A "third stream" as used herein means a non-primary air stream capable of increasing fluid energy to produce a minority of total propulsion system thrust. The third stream generally receives inlet air (air from a ducted passage downstream of a primary fan) instead of freestream air (as the primary fan would). A pressure ratio of the third stream is higher than that of the primary propulsion stream (e.g., a bypass or propeller driven propulsion stream). The thrust is produced through a dedicated nozzle or through mixing of an airflow through the third stream with a primary propulsion stream or a core air stream, e.g., into a common nozzle.

In certain exemplary embodiments, an operating temperature of the airflow through the third stream is less than a maximum compressor discharge temperature for the engine, and more specifically is less than 350 degrees Fahrenheit (such as less than 300 degrees Fahrenheit, such as less than 250 degrees Fahrenheit, such as less than 200 degrees Fahrenheit, and at least as great as an ambient temperature). In certain exemplary embodiments, these operating temperatures facilitate heat transfer to or from the airflow through the third stream and a separate fluid stream. Further, in certain exemplary embodiments, the airflow through the third stream contributes less than 50% of the total engine thrust (and at least, e.g., 2% of the total engine thrust) at a takeoff condition, or more particularly while operating at a rated takeoff power at sea level, static flight speed, 86 degree Fahrenheit ambient temperature operating conditions.

Furthermore in certain exemplary embodiments, aspects of the airflow through the third stream (e.g., airstream, mixing, or exhaust properties), and thereby the aforementioned exemplary percent contribution to total thrust, passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

The term "dry mass" is defined as being the mass of a component of a gas turbine engine or of the gas turbine engine itself excluding fluids (such as oil and fuel). For example, the dry mass of the gas turbine engine itself is a mass of the gas turbine engine excluding fluids prior to installation of the gas turbine engine onto an aircraft or aeronautical vehicle, and not including a nacelle. Additionally, the dry mass of a component of the gas turbine engine, such as an electric machine, is a mass of the component excluding fluids prior to installation on the gas turbine engine.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" are used interchangeably to distinguish one component from another and are not intended to signify location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

The terms "proximate" and "adjacent" refers to being closer to one end or component than an opposite end or another component. For example, when used in conjunction with first and second ends; high pressure and low pressure sides; or the like, the phrase "proximate the first end," or "proximate the high pressure side," refers to a location closer to the first end than the second end, or closer to the high pressure side than the low pressure side, respectively.

Generally, a gas turbine engine includes a fan and a turbomachine, with the turbomachine rotating the fan to generate thrust. The turbomachine includes a compressor section, a combustion section, a turbine section, and an exhaust section and defines a working gas flowpath therethrough. The gas turbine engine includes one or more electric machines (such as electric motors and electric generators) that generate heat and are exposed to heat. The heat interferes with operation of the electric machine, such as increasing an electrical resistance of windings that leads to a decreased magnetic field generated by the windings. Thermal management is used to dissipate heat, which leads to improved efficiency and lifespan of the electric machines. Moreover, the power density of the electric machine is dependent on sufficiency of cooling to dissipate heat from the windings, core, etc. of the electric machine.

Accordingly, the size and weight of electric machines used in gas turbine engines is typically limited by the amount of cooling that can be supplied to the electric machine. The inventors sought out a means to improve cooling of electric machines without negatively impacting engine efficiency and propulsive efficiency, in order to provide maximize the power density of an electric machine for a particular gas turbine engine.

The inventors developed a cooling system for an electric machine of a gas turbine engine. In particular, the inventors proceeded in the manner of designing a gas turbine engine having an electric machine positioned in various locations and a cooling system including a coolant pump, at least one coolant source, and at least one coolant heat exchanger in fluid communication with the electric machine. Moreover, the inventors discovered during the course of designing several gas turbine engines having an electric machine and cooling system having various thermal management requirements (including the configurations illustrated and described in detail herein), that a relationship exists among a power density of the gas turbine engine, a power density of the electric machine, a first rotational speed of the low pressure shaft, a second rotational speed of the high pressure shaft, a coolant supply factor, and a mounting location of the electric machine within the gas turbine engine.

With a goal of arriving at an improved gas turbine engine including a lightweight and compact cooling system for providing cooling to an electric machine, the inventors proceeded in the manner of designing gas turbine engines having an electric machine cooling system with various power densities of the gas turbine engine, power densities of the electric machine, first rotational speeds of the low pressure shaft, second rotational speeds of the high pressure shaft, coolant supply factors, and mounting locations of the electric machine within the gas turbine engine; checking an operability and electric machine cooling characteristics of the designed gas turbine engines; redesigning the gas turbine engines to vary the noted parameters based on the impact on other aspects of the gas turbine engines; rechecking the operability and electric machine cooling characteristics of the redesigned gas turbine engines; etc. during the design of several different types of electric machines and cooling systems, including the electric machines cooling systems described herein, which are described below in greater detail.

Referring now to FIGS. 1A-1B, schematic cross-sectional views of a gas turbine engine 100 are provided according to an example embodiment of the present disclosure. Particularly, FIGS. 1A-1B provides a turbofan engine having a rotor assembly with a single stage of unducted rotor blades. In such a manner, the rotor assembly is referred to herein as an "unducted fan," or the entire gas turbine engine 100 is referred to as an "unducted turbofan engine." In addition, the gas turbine engine 100 of FIGS. 1A-1B includes a third stream extending from the compressor section to a rotor assembly flowpath over the turbomachine, as will be explained in more detail below. In other example embodiment, the gas turbine engine 100 is a turbofan engine, as will be discussed below with respect to FIGS. 2A-2B.

For reference, the gas turbine engine 100 defines an axial direction A, a radial direction R, and a circumferential direction C. Moreover, the gas turbine engine 100 defines an axial centerline or longitudinal centerline axis 112 that extends along the axial direction A. In general, the axial direction A extends parallel to the longitudinal centerline axis 112, the radial direction R extends outward from and inward to the longitudinal centerline axis 112 in a direction orthogonal to the axial direction A, and the circumferential direction extends three hundred sixty degrees (360°) around the longitudinal centerline axis 112. The gas turbine engine 100 extends between a forward end 114 and an aft end 116, e.g., along the axial direction A.

The gas turbine engine 100 includes a turbomachine 120 and a rotor assembly, also referred to a fan section 150, positioned upstream thereof. Generally, the turbomachine 120 includes, in serial flow order, a compressor section, a combustion section, a turbine section, and an exhaust section. Particularly, as shown in FIGS. 1A-1B, the turbomachine 120 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 for pressurizing the air that enters the turbomachine 120 through core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 130 downstream to a high pressure turbine 132. The high pressure turbine 132 drives the high pressure compressor 128 through a high pressure ("HP") shaft 136. In this regard, the high pressure turbine 132 is drivingly coupled with the high pressure compressor 128. The high energy combustion products then flow to a low pressure turbine 134. The low pressure turbine 134 drives the low pressure compressor 126 and components of the fan section 150 through a low pressure shaft ("LP") 138. In this regard, the low pressure turbine 134 is drivingly coupled with the low pressure compressor 126 and components of the fan section 150. The LP shaft 138 is coaxial with the HP shaft 136 in this example embodiment. After driving each of the turbines 132, 134, the combustion products exit the turbomachine 120 through a turbomachine exhaust nozzle 140.

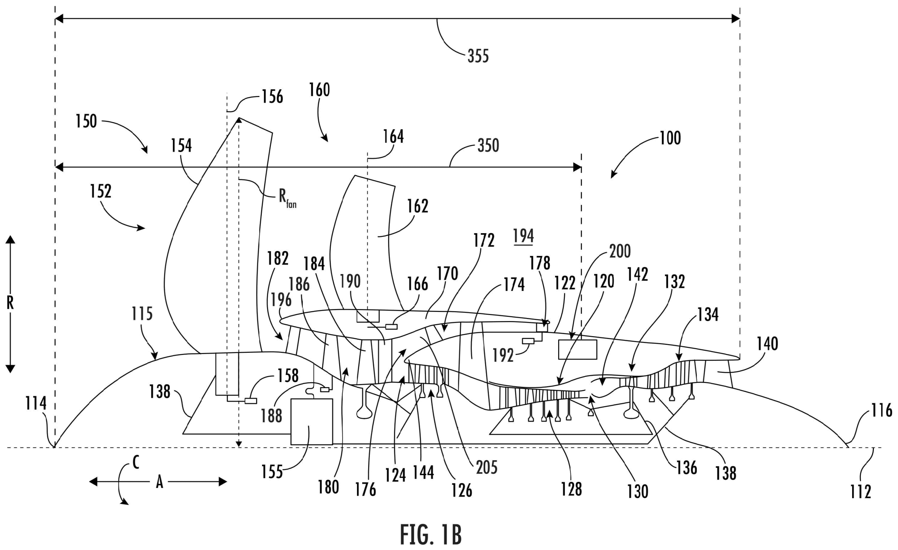

The gas turbine engine 100 includes an electric machine 200 drivingly coupled to the low pressure shaft 138 or the high pressure shaft 136. For example, as shown in FIG. 1A, the electric machine 200 is disposed in a fan hub section 115 adjacent the forward end 114 such that the low pressure turbine 134 drives the low pressure compressor 126, components of the fan section 150, and the electric machine 200 through the low pressure shaft 138. Alternatively, with reference to FIG. 1B, the electric machine 200 is disposed in the core cowl 122 such that the high pressure turbine 132 drives the high pressure compressor 128, and the electric machine 200 through a high pressure shaft 136.

With reference to FIGS. 1A-1B, an electric machine mounting location is defined based on a mounting length 350 defined between a forward-most end (at the forward end 114) of the gas turbine engine 100 and a center of the electric machine 200. Moreover, the gas turbine engine 100 defines an engine length 355 defined between a forward-most end (such as at the forward end 114) of the gas turbine engine 100 and an aft-most end of the core cowl 122 (adjacent the turbomachine exhaust nozzle 140 and proximate the aft end 116). More specifically, the engine length 355 is defined between the forward most end of the fan hub section 115 and an aft flange of the core cowl 122.

In at least one example embodiment, the electric machine 200 can be an electric motor operable to drive or motor the LP shaft 138 or the HP shaft 136, e.g., during an engine burst. In other example embodiments, the electric machine 200 can be an electric generator operable to convert mechanical energy into electrical energy. Example electric generators include Variable Frequency Starter Generator (VSFG), Integrated Drive Generator (IDG), Variable Frequency Generator (VFG), etc. In this way, electrical power generated by the electric machine 200 can be directed to various engine and/or aircraft systems.

The turbomachine 120 defines a working gas flowpath or core duct 142 that extends between the core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) is referred to as a second stream.

The fan section 150 includes a fan 152, which is the primary fan in this example embodiment. For the depicted embodiment of FIGS. 1A-1B, the fan 152 is an open rotor or unducted fan. In such a manner, the gas turbine engine 100 is referred to as an open rotor engine.

As depicted, the fan 152 includes an array of fan blades 154. The fan blades 154 are rotatable, e.g., about the longitudinal centerline axis 112. As noted above, the fan 152 is drivingly coupled with the low pressure turbine 134 via the LP shaft 138. For the embodiments shown in FIGS. 1A-1B, the fan 152 is coupled with the LP shaft 138 via a speed reduction gearbox 155, e.g., in an indirect-drive or geared-drive configuration.

Moreover, the array of fan blades 154 can be arranged in equal spacing around the longitudinal centerline axis 112. Each fan blade 154 has a root and a tip with a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore are used to change a pitch of the fan blades 154 about their respective central blade axis 156.

The fan section 150 further includes a fan guide vane array 160 that includes fan guide vanes 162 disposed around the longitudinal centerline axis 112. For this embodiment, the fan guide vanes 162 are not rotatable about the longitudinal centerline axis 112. Each fan guide vane 162 has a root and a tip with a span defined therebetween. The fan guide vanes 162 is unshrouded as shown in FIGS. 1A-1B or, alternatively, is shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and therefore are used to change a pitch of the fan guide vane 162 about its respective central blade axis 164. However, in other embodiments, each fan guide vane 162 is fixed or unable to be pitched about its central blade axis 164. The fan guide vanes 162 are mounted to the fan cowl 170.

As shown in FIGS. 1A-1B, in addition to the fan 152, which is unducted, a ducted fan 184 is included aft of the fan 152, such that the gas turbine engine 100 includes both a ducted and an unducted fan which both serve to generate thrust through the movement of air without passage through at least a portion of the turbomachine 120 (e.g., without passage through the high pressure compressor 128 and combustion section for the embodiment depicted). The ducted fan 184 is rotatable about the same axis (e.g., the longitudinal centerline axis 112) as the fan blade 154. The ducted fan 184 is, for the embodiment depicted, driven by the low pressure turbine 134 (e.g., coupled to the LP shaft 138). In the embodiment depicted, as noted above, the fan 152 is referred to as the primary fan, and the ducted fan 184 is referred to as a secondary fan. It will be appreciated that these terms "primary" and "secondary" are terms of convenience, and do not imply any particular importance, power, or the like.

The ducted fan 184 includes a plurality of fan blades (not separately labeled in FIGS. 1A-1B) arranged in a single stage, such that the ducted fan 184 is referred to as a single stage fan. The fan blades of the ducted fan 184 can be arranged in equal spacing around the longitudinal centerline axis 112. Each blade of the ducted fan 184 has a root and a tip with a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flowpath, or simply a fan duct 172. According to this embodiment, the fan flowpath or fan duct 172 is understood as forming at least a portion of the third stream of the gas turbine engine 100.

Incoming air enters through the fan duct 172 through a fan duct inlet 176 and exits through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially-extending, circumferentially-spaced stationary struts 174. The stationary struts 174 are each aerodynamically contoured to direct air flowing thereby. Other struts in addition to the stationary struts 174 are used to connect and support the fan cowl 170 and/or core cowl 122. In many embodiments, the fan duct 172 and the core duct 142 at least partially co-extend (generally axially) on opposite sides (e.g., opposite radial sides) of the core cowl 122. For example, the fan duct 172 and the core duct 142 each extend directly from a leading edge 144 of the core cowl 122 and partially co-extend generally axially on opposite radial sides of the core cowl 122.

The gas turbine engine 100 also defines or includes an inlet duct 180. The inlet duct 180 extends between the engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the gas turbine engine 100 includes one or more features to increase an efficiency of a third stream thrust, Fn_{3S} (e.g., a thrust generated by an airflow through the fan duct 172 exiting through the fan exhaust nozzle 178, generated at least in part by the ducted fan 184). In particular, the gas turbine engine 100 further includes an array of inlet guide vanes 186 positioned in the inlet duct 180 upstream of the ducted fan 184 and downstream of the engine inlet 182. The array of inlet guide vanes 186 are arranged around the longitudinal centerline axis 112. For this embodiment, the inlet guide vanes 186 are not rotatable about the longitudinal centerline axis 112. Each inlet guide vanes 186 defines a central blade axis (not labeled for clarity), and is rotatable about its respective central blade axis, e.g., in unison with one another. In such a manner, the inlet guide vanes 186 is considered a variable geometry component. One or more actuators 188 are provided to facilitate such rotation and therefore are used to change a pitch of the inlet guide vanes 186 about their respective central blade axes. However, in other embodiments, each inlet guide vanes 186 are fixed or unable to be pitched about its central blade axis.

Further, located downstream of the ducted fan 184 and upstream of the fan duct inlet 176, the gas turbine engine 100 includes an array of outlet guide vanes 190. As with the array of inlet guide vanes 186, the array of outlet guide vanes 190 are not rotatable about the longitudinal centerline axis 112. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the gas turbine engine 100 includes one or more actuators 192 for modulating the variable geometry exhaust nozzle. For example, the variable geometry exhaust nozzle is configured to vary a total cross-sectional area (e.g., an area of the nozzle in a plane perpendicular to the longitudinal centerline axis 112) to modulate an amount of thrust generated based on one or more engine operating conditions (e.g., temperature, pressure, mass flowrate, etc. of an airflow through the fan duct 172). In another example, a fixed geometry exhaust nozzle is adopted.

The combination of the array of inlet guide vanes 186 located upstream of the ducted fan 184, the array of outlet guide vanes 190 located downstream of the ducted fan 184, and the fan exhaust nozzle 178 results in a more efficient generation of third stream thrust, Fn_{3S}, during one or more engine operating conditions. Further, by introducing a variability in the geometry of the inlet guide vanes 186 and the fan exhaust nozzle 178, the gas turbine engine 100 is capable of generating more efficient third stream thrust, Fn_{3S}, across a relatively wide array of engine operating conditions, including takeoff and climb (where a maximum total engine thrust Fn_{Total}, is generally needed) as well as cruise (where a lesser amount of total engine thrust, Fn_{Total}, is generally needed).

Moreover, referring still to FIGS. 1A-1B, in exemplary embodiments, air passing through the fan duct 172 is relatively cooler (e.g., lower temperature) than one or more fluids utilized in the turbomachine 120. In this way, one or more heat exchangers 205 are positioned in thermal communication with the fan duct 172. For example, one or more heat exchangers 205 are disposed within the fan duct 172 and utilized to cool one or more fluids from the core engine with the air passing through the fan duct 172, as a resource for removing heat from a fluid, e.g., compressor bleed air, oil, or fuel.

Although not depicted, the heat exchanger 205 is an annular heat exchanger extending substantially 360 degrees in the fan duct 172 (e.g., at least 300 degrees, such as at least 330 degrees). In such a manner, the heat exchanger 205 effectively utilizes the air passing through the fan duct 172 to cool one or more systems of the gas turbine engine 100 (e.g., lubrication oil systems, compressor bleed air, electrical components, etc.). The heat exchanger 205 uses the air passing through fan duct 172 as a heat sink and correspondingly increases the temperature of the air downstream of the heat exchanger 205 and exiting the fan exhaust nozzle 178.

It will be appreciated, however, that the exemplary gas turbine engine 100 is provided by way of example only. In other exemplary embodiments, the gas turbine engine 100 includes any other configuration. For example, in other exemplary embodiments, the turbomachine 120 has any other number and arrangement of shafts, spools, compressors, turbines, etc. Further, in other exemplary embodiments, the gas turbine engine 100 is alternatively configured as a ducted turbofan engine, as will be discussed with respect to FIGS. 2A-2B. Moreover, in still other exemplary embodiments, the gas turbine engine 100 is configured as a ducted turbofan engine including an outer nacelle surrounding the fan 152 and a portion of the turbomachine 120; as a direct drive gas turbine engine (does not include a reduction gearbox, such as the speed reduction gearbox 155); as a fixed pitch gas turbine engine (does not include a variable pitch fan, such as the fan 152); as a two-stream gas turbine engine (does not include the fan duct 172); etc.

FIGS. 2A-2B are schematic cross-sectional views of a gas turbine engine 10 in accordance with an exemplary embodiment of the present disclosure. More particularly, for the embodiment of FIGS. 2A-2B, the gas turbine engine 10 is a high-bypass turbofan jet engine, sometimes also referred to as a "turbofan engine." As shown in FIGS. 2A-2B, the gas turbine engine 10 defines an axial direction A (extending parallel to a longitudinal centerline axis 12 provided for reference), a radial direction R, and a circumferential direction C extending about the longitudinal centerline axis 12. In general, the gas turbine engine 10 includes a fan section 14 and a turbomachine 16 disposed downstream from the fan section 14. The gas turbine engine 10 extends between a forward end 23 and an aft end 25.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft 34 (which is additionally or alternatively a spool) drivingly connects the HP turbine 28 to the HP compressor 24. A low pressure (LP) shaft 36 (which is additionally or alternatively a spool) drivingly connects the LP turbine 30 to the LP compressor 22. The compressor section, combustion section 26, turbine section, and jet exhaust nozzle section 32 together define a working gas flowpath 37.

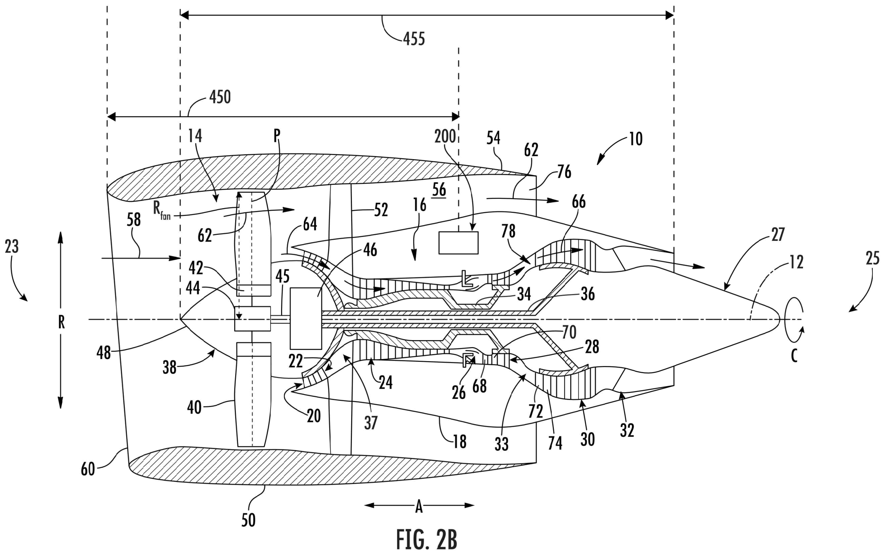

The gas turbine engine 10 includes an electric machine 200 drivingly coupled to the LP shaft 36 or the HP shaft 34. The electric machine 200 is similar or analogous to the electric machine 200 discussed with respect to FIGS. 1A-1B. As shown in FIG. 2A, the electric machine 200 is disposed in an exhaust cone section 27 adjacent the aft end 25 such that the electric machine is drivingly coupled to the LP shaft 36. With reference to FIG. 2B, the electric machine 200 is disposed in the outer casing and driving coupled to the LP shaft 36 or the HP shaft 34.

With reference to FIGS. 2A-2B, an electric machine mounting location is defined based on a mounting length 450 defined between a forward-most end of the gas turbine engine 10 (such as at the forward end 23 of the nacelle 50) and a center of the electric machine 200. Moreover, the gas turbine engine 10 defines an engine length 455 defined between the forward-most end of the front hub 48 and an aft end of the outer casing 18. More specifically, the engine length 455 is defined between the forward-most end of the front hub 48 and an aft flange disposed adjacent the jet exhaust nozzle section 32.

In at least one example embodiment, the electric machine 200 can be an electric motor operable to drive or motor the LP shaft 36 or the HP shaft 34, e.g., during an engine burst. In other example embodiments, the electric machine 200 can be an electric generator operable to convert mechanical energy into electrical energy. Example electric generators include a Variable Frequency Starter Generator (VSFG), an Integrated Drive Generator (IDG), a Variable Frequency Generator (VFG), etc. In this way, electrical power generated by the electric machine 200 can be directed to various engine and/or aircraft systems.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gearbox 46, and the fan blades 40, disk 42, and pitch change mechanism 44 are rotatable together about the longitudinal centerline axis 12 by LP shaft 36 across the power gearbox 46. The power gearbox 46 includes a plurality of gears for adjusting a rotational speed of the fan 38 relative to a rotational speed of the LP shaft 36, such that the fan 38 rotates at a more efficient fan speed.

Referring still to the exemplary embodiment of FIGS. 2A-2B, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56 and a second portion of air 64 as indicated by arrow 64 is directed or routed into the working gas flowpath 37, or more specifically into the LP compressor 22. The ratio between the first portion of air 62 and the second portion of air 64 is commonly known as a bypass ratio. A pressure of the second portion of air 64 is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

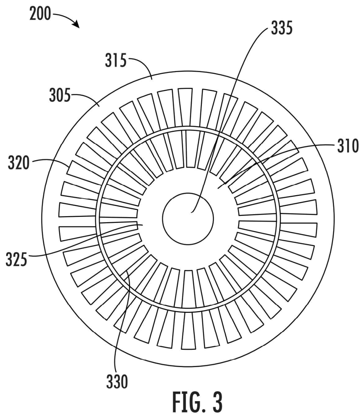

FIG. 3 is a front schematic view of the electric machine 200 of the exemplary gas turbine engine 10, 100 of FIGS. 1A-2B according to an example embodiment of the present disclosure.

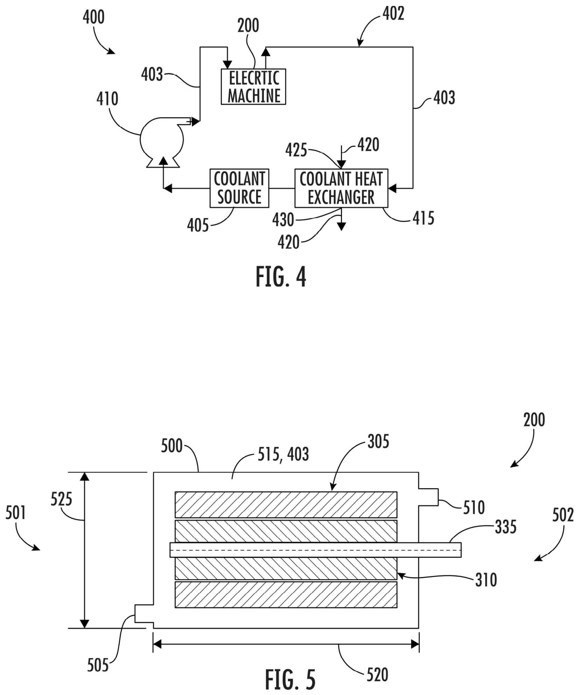

The electric machine 200 includes a stator assembly 305 and a rotor assembly 310 rotatable within the stator assembly 305. The stator assembly 305 includes a stator core 315 defining a plurality of stator channels, such as stator slots 320. The rotor assembly 310 includes a rotor core 325 defining a plurality of rotor channels, such as rotor slots 330, and a shaft 335. The stator slots 320 and the rotor slots 330 house windings (not shown) through which current is provided or induced. During operation of the electric machine 200, the windings emit heat, which increases electrical resistance in the windings and reduce overall output of the electric machine 200. Accordingly, a cooling system in fluid communication with the electric machine 200 is configured to transfer heat away from the stator assembly 305 and the rotor assembly 310, as will be discussed below with respect to FIG. 4.

FIG. 4 is a schematic diagram of a cooling system 400 for the electric machine 200 of the exemplary gas turbine engine 10, 100 of FIGS. 1A-2B according to an example embodiment of the present disclosure.

The cooling system 400 includes a cooling pathway 402 for supplying a cooling fluid, such as a coolant 403, to the electric machine 200 for transferring heat from the electric machine 200 to the coolant 403. The cooling system 400 includes a at least one coolant source 405, such as a coolant tank, for storing the coolant 403; a coolant pump 410; and one or more coolant heat exchangers 415. The electric machine 200 is downstream of the at least one coolant source 405. Additionally, the one or more coolant heat exchangers 415 are downstream of the electric machine 200 and upstream of the at least one coolant source 405. The coolant pump 410 generates a flow of the coolant 403 through the cooling pathway 402 from the at least one coolant source 405, through the electric machine 200, to the one or more coolant heat exchangers 415, and back to the at least one coolant source 405. The coolant 403 includes water-glycol, oil, water, supercritical carbon dioxide, liquid nitrogen, liquid helium, liquid hydrogen, air, fuel, or a combination thereof.

The one or more coolant heat exchangers 415 are configured to receive a heat sink fluid 420 and transfer thermal energy, or heat, from the coolant 403 flowing downstream of the electric machine 200 to the heat sink fluid 420. For example, the heat sink fluid 420 enters the one or more coolant heat exchangers 415 at an inlet 425 and exits the one or more coolant heat exchangers 415 at an outlet 430. The heat sink fluid 420 is configured to absorb heat from the coolant 403 that has absorbed heat from the electric machine 200. Accordingly, the heat sink fluid 420 exiting the one or more coolant heat exchangers 415 at the outlet 430 has a higher temperature than the heat sink fluid 420 entering the one or more coolant heat exchangers 415 at the inlet 425. The heat sink fluid 420 includes fuel, liquid hydrogen, air, or a combination thereof.

FIG. 5 is a side cross-sectional view of the electric machine 200 of FIG. 3 according to an example embodiment of the present disclosure.

As shown in FIG. 5, the electric machine 200 includes a casing 500 housing the stator assembly 305, the rotor assembly 310, and at least a portion of the shaft 335. For example, at least a portion of the shaft 335 extends out of and to an exterior of the casing 500. The casing 500 defines a fluid inlet 505 and a fluid outlet 510. As shown in FIG. 5, the fluid inlet 505 is on a first side 501 of the electric machine 200 and the fluid outlet 510 is on a second side 502 of the electric machine 200 opposite the first side 501. In other example embodiments, the fluid inlet 505 is on the second side 502 and the fluid outlet 510 is on the first side 501. It should also be understood that the fluid inlet 505 and the fluid outlet 510 is positioned on any side of the casing 500.

The coolant 403 is configured to enter the casing 500 of the electric machine 200 via the fluid inlet 505 and exit the casing 500 via the fluid outlet 510. Moreover, the fluid inlet 505 is configured to be in fluid communication with the at least one coolant source 405 and the fluid outlet 510 is configured to be in fluid communication with the one or more coolant heat exchangers 415, discussed with respect to FIG. 4.

The casing 500 defines a fluid chamber 515 surrounding the stator assembly 305 and the rotor assembly 310. The fluid chamber 515 is in fluid communication with the fluid inlet 505 and the fluid outlet 510. As discussed above with respect to FIG. 4, the coolant 403 is configured to enter the fluid chamber 515 via the fluid inlet 505 and absorb heat from the stator assembly 305 and the rotor assembly 310 before exiting the fluid chamber 515 via the fluid outlet 510.

As shown in FIG. 5, the electric machine 200 defines an electric machine length 520 extending between the first side 501 and the second side 502. The electric machine 200 also defines an electric machine diameter 525 extending perpendicular to the electric machine length 520.

As alluded to earlier, the inventors discovered, unexpectedly during the course of designing gas turbine engines having an electric machine cooling system and evaluating an overall engine and thermal management performance, that a significant relationship between power densities of the gas turbine engine, power densities of the electric machine, first rotational speeds of the low pressure shaft, second rotational speeds of the high pressure shaft, coolant supply factors, and mounting locations of the electric machine within the gas turbine engine. The relationship is an indicator of the ability of a gas turbine having an electric machine and electric machine cooling system to be able to efficiently dissipate heat from the electric machine. The relationship is represented by an electric machine cooling factor. The electric machine cooling factor measures a cooling capacity of the electric machine required for effectively operating the electric machine, and is analogous to an amount of thermal resistance needed to be overcome in the electric machine.

The power density of the gas turbine engine is determined by multiplying a value by a fan tip speed of the gas turbine engine. The value is determined by dividing a rated thrust of the gas turbine engine by a dry mass of the engine. The power density of the electric machine is determined by dividing a maximum electric machine power rating by a dry mass of the electric machine. Accordingly, the power density of the gas turbine engine and the power density of the electric machine are based on the architecture of the given gas turbine engine and the given electric machine, respectively.

The coolant supply factor relates a coolant pump volume to a total volume of the coolant pump and the electric machine. The coolant supply factor is determined by subtracting a quotient from 1. The quotient is determined by dividing the coolant pump volume by the sum of an electric machine volume and the coolant pump volume. Lower values for the coolant supply factor indicate that a lower cooling capacity is required for the electric machine. For example, less cooling capacity is needed for a coolant pump having a larger volume than a volume of the electric machine. Moreover, larger cooling pumps can allow bigger pressure drops across the electric machine, allowing for greater cooling across the electric machine.

The mounting location of the electric machine within the gas turbine engine indicates an axial distance from a forward-most location of the gas turbine engine to the mounting location of the electric machine. The further the electric machine is mounted from the forward-most location, the hotter the electric machine will be. Accordingly, a greater axial distance, which indicates that the electric machine is mounted further away from the forward-most location on the gas turbine engine, indicates that the electric machine requires more cooling.

The ranges for the electric machine cooling factor provided herein capture specific subsets of structures for electric machines and electric machine cooling systems that takes into consideration various benefits and penalties of choosing one structural architecture of one electric machine and/or electric machine cooling system over another. In this regard, as discovered by the inventors, characteristics of the electric machines and electric machine cooling systems strike a balance between cooling channel size and pump size, which impacts weight; mounting locations of the electric machine based on heat load; and propulsive efficiency considerations.

For example, going below the provided range for the power density of the electric machine would require an electric machine that is too heavy, which would require additional thermal management, such as in the form of additional heat exchangers, to increase cooling and prevent overheating of the electric machine. This adds complexity and weight and also negatively impacts propulsive efficiency. Moreover, exceeding the ranges provided for the electric machine cooling factor would require micro-sized cooling channels extending through the electric machine, which are not practical for manufacturing with additive or traditional subtractive technologies. Additionally, a larger pump would be required for circulating a coolant to the electric machine due to the significant coolant pressure drop that would occur in such micro-sized cooling channels, which increases weight and negatively impacts propulsive efficiency. The provided power density range for the electric machine cooling factor covers the use of conventional or composite materials for at least a portion of the stator core 315 and/or the rotor core 325.

Accordingly, the ranges for the electric machine cooling factor provided herein reflect electric machine cooling systems having improved cooling relative to other systems. The electric machine cooling factor provided herein also strikes a balance between providing a more power dense engine and a more power dense electric machine without added weight and complexity that comes with such power dense engines and electric machines. Moreover, the relationship discovered, *infra,* identifies a gas turbine engine suited for a particular mission requirement, one that takes into account efficiency, weight, thermal capacity needs, complexity, reliability, and other factors influencing the optimal choice for a gas turbine engine with electric machines and electric machine cooling systems.

In addition to yielding an improved gas turbine engine with electric machine cooling systems, as explained in detail above, utilizing this relationship, the inventors found that the number of suitable or feasible gas turbine engine designs capable of meeting the above design requirements could be greatly diminished, thereby facilitating a more rapid down selection of designs to consider as a gas turbine engine (with electric machines and electric machine cooling systems) being developed. Such a benefit provides more insight to the requirements for a given gas turbine engine well before specific technologies, integration and system requirements are developed fully. Such a benefit avoids late-stage redesign.

The desired relationship providing for the improved gas turbine engine, discovered by the inventors, is an electric machine cooling factor EMCF, expressed as: $EMCF = {\left({PD}_{engine}\times {PD}_{EM}\right)}^{\frac{1}{2}} \times \frac{N 2}{N 1} \times {f}_{coolant} \times {f}_{{EM}_{location}}$ (1)

Generally, the electric machine cooling factor EMCF measures the required cooling capacity for the electric machine 200 mounted to the gas turbine engine 10, 100 to effectively operate. The electric machine cooling factor EMCF is measured in W/kg or kW/kg and relates an engine mass power density PD_{engine} of the gas turbine engine 10, 100; an electric machine power density PD_{EM} of the electric machine 200; a first rotational speed N1 of the LP shaft 36, 138; a second rotational speed N2 of the HP shaft 34, 136; a coolant supply factor f_{coolant} of the electric machine 200; and an electric machine mounting location factor f_{EM_location} of the electric machine 200. The electric machine cooling factor EMCF is greater than 18 kW/kg and less than 281 kW/kg. More specifically, the electric machine cooling factor EMCF is greater than 18 kW/kg and less than 125 kW/kg.

The engine mass power density PD_{engine} of (1) measures a mass power density of the gas turbine engine 10, 100 in the same units as the electric machine cooling factor (W/kg or kW/kg). The engine mass power density PD_{engine} is based on a rated thrust T of the gas turbine engine 10, 100; an engine dry mass M_{engine} of the gas turbine engine 10, 100; and a fan tip speed v_{fan_tip} of the fan 38, 152. The engine mass power density PD_{engine} is greater than or equal to 2 kW/kg and less than or equal to 786 kW/kg. The engine mass power density PD_{engine} is expressed as: ${PD}_{engine} = \frac{T}{{M}_{engine}} \times {v}_{{fan}_{tip}}$ (2)

The rated thrust T of (2) is measured in Newtons (N) or kilo-Newtons (kN). The rated thrust T is greater than 4 kN and less than 600 kN. More specifically, the rated thrust T is greater than 4 kN and less than 120 kN.

The engine dry mass M_{engine} of (2) is measured in kilograms (kg). The engine dry mass M_{engine} is greater than 100 kg and less than 10,000 kg. More specifically, the engine dry mass M_{engine} is greater than 100 kg and less than 2,000 kg.

The fan tip speed v_{fan_tip} of (2) is measured in m/s. The fan tip speed v_{fan_tip} of (2) is measured when the engine is operated at a rated speed and is based on a fan diameter D_{fan} of the fan 38, 152; a gear ratio GR of the gearbox 46, 155; and the first rotational speed N1 of the LP shaft 36, 138. Moreover, the fan tip speed v_{fan_tip} is measured at 100% capacity or at a maximum operating speed of the gas turbine engine 10, 100. Additionally, the fan tip speed v_{fan_tip} can be calculated for an engine configuration with or without speed reduction (e.g., the gearbox 46, 155).

The fan diameter D_{fan} is defined as a fan radius R_{fan} multiplied by two, or stated mathematically, as *D_{fan} = R_{fan}* × 2, where the fan radius R_{fan} spans from the longitudinal centerline axis 12, 112 to a leading tip edge of one of the fan blades 40, 154. For example, as shown in FIGS. 1A-2B, the fan radius R_{fan} is defined between the longitudinal centerline axis 12 and a leading edge tip of one of the fan blades 40, 154. The unit of measure for the fan radius R_{fan} and the fan diameter D_{fan} is meters (m). The fan diameter D_{fan} is greater than 0.5 m and less than 5 m. More specifically, the fan diameter D_{fan} is greater than 0.5 m and less than 2.5 m.

The gear ratio GR is a dimensionless quantity that relates an input coupled to the turbine section of the turbomachine 16, 120 and an output coupled to the fan 38, 152, which is analogous to the speed reduction gearbox 155 in FIGS. 1A-1B and the power gearbox 46 in FIGS. 2A-2B. For example, the gear ratio GR is defined by a ratio of a first rotational speed of the input and a second rotational speed of the output. The gear ratio GR is greater than 1 and less than 15. More specifically, the gear ratio GR is greater than 1 and less than 5. A gear ratio GR equal to 1 indicates no speed reduction. For example, there is direct coupling between the LP shaft 138, 36 and the fan 152, 38, which covers direct-drive aircraft configurations.

The unit of measure for the first rotational speed N1 of the LP shaft 36, 138 is rotations per minute (RPMs). The first rotational speed N1 is greater than 2,000 RPMs and less than 20,000 RPMs. More specifically, the first rotational speed N1 is greater than 2,000 RPMs and less than 12,000 RPMs. The first rotational speed N1 of the LP shaft 36, 138 is measured when the engine is operated at a maximum rated speed. For example, the first rotational speed N1 of the LP shaft 36, 138 is measured at 100% capacity or at a maximum operating speed.

The fan tip speed v_{fan_tip} is determined by multiplying Pi (π), a first quotient, and a second quotient. The first quotient is determined by dividing the fan diameter D_{fan} by the gear ratio GR. The second quotient is determined by dividing the first rotational speed N1 by 60. Accordingly, the fan tip speed v_{fan_tip} is expressed as follows: ${v}_{{fan}_{tip}} = π \times \frac{{D}_{fan}}{GR} \times \frac{N 1}{60}$ (3)

The electric machine power density PD_{EM} of (1) is based on a maximum electric machine power rating P_{EM_max} and an electric machine dry mass M_{EM}. The electric machine power density PD_{EM} is measured in the same units as the electric machine cooling factor (W/kg or kW/kg) and is expressed as follows: ${PD}_{EM} = \frac{{P}_{EM _ max}}{{M}_{EM}}$ (4)

The maximum electric machine power rating P_{EM_max} is measured in kW and is determined based on torque and shaft speed or a combination of voltage, current, electric machine efficiency, and power factor. The maximum electric machine power rating P_{EM_max} is a maximum rated power from a certification document when the electric machine is operating under a maximum continuous operation. The maximum electric machine power rating P_{EM_max} is greater than 200 kW.

The electric machine dry mass M_{EM} is measured in kg and is based on a dry mass of the electric machine 200 within the casing 500 defined by the electric machine length 520 and the electric machine diameter 525 and includes the casing 500, the stator assembly 305, the rotor assembly 310, and the shaft 335 without the coolant 403 (FIG. 5). The electric machine dry mass M_{EM} is greater than or equal to 4 kg and less than or equal to 1,000 kg.

The coolant supply factor f_{coolant} of (1) is a dimensionless quantity relating a coolant pump volume Vₚᵤₘₚ and an electric machine volume V_{EM}. The coolant supply factor f_{coolant} is determined by subtracting a quotient from one (1). The coolant supply factor f_{coolant} is defined as follows: ${f}_{coolant} = 1 - \frac{{V}_{pump}}{{V}_{EM} + {V}_{pump}}$ (5)

The quotient of (5) is determined by dividing the coolant pump volume Vₚᵤₘₚ by a sum of the electric machine volume V_{EM} and the coolant pump volume Vₚᵤₘₚ. The coolant pump volume Vₚᵤₘₚ is the volume of the coolant pump 410, discussed with respect to FIG. 4. For example, the coolant pump volume Vₚᵤₘₚ includes a volume of a casing of the coolant pump 410 based on a length and diameter of the casing of the coolant pump 410. The electric machine volume V_{EM} is a volume of the electric machine 200. For example, the electric machine volume V_{EM} is a volume of the casing 500, discussed with respect to FIG. 5, and is based on the electric machine length 520 and the electric machine diameter 525 of the casing 500. The coolant pump volume Vₚᵤₘₚ and the electric machine volume V_{EM} are measured in m³. The coolant supply factor f_{coolant} is greater than 0.1 and less than 1. More specifically, the coolant supply factor f_{coolant} is greater than 0.1 and less than 0.8.

The electric machine mounting location factor f_{EM_location} of (1) is a dimensionless quantity relating an electric machine mounting location L_{EM_location} and an engine length L_{engine}. The electric machine mounting location L_{EM_location} is the mounting length 350, 450 discussed with respect to FIGS. 1A-2B, and the engine length L_{engine} is the engine length 355, 455 discussed with respect to FIGS. 1A-2B. The electric machine mounting location factor f_{EM_location} adds one (1) to a ratio of the electric machine mounting location L_{EM_location} over a sum of the electric machine mounting location L_{EM_location} and the engine length L_{engine}. Accordingly, the electric machine mounting location factor f_{EM_location} is defined as follows: ${f}_{EM _ location} = 1 + \frac{{L}_{{EM}_{location}}}{{L}_{{EM}_{location}} + {L}_{engine}}$ (6)

The electric machine mounting location factor f_{EM_location} is greater than 1 and less than 1.6. More specifically, the electric machine mounting location factor f_{EM_location} is greater than 1 and less than 1.3. The electric machine mounting location factor f_{EM_location} is indicative of an amount of cooling required by the electric machine based on its location within the gas turbine engine. For example, an electric machine mounted more in the aft ward direction, such as the electric machine 200 shown in FIGS. 1B and 2A, will require more cooling than an electric machine mounted more in the forward direction, such as the electric machine 200 shown in FIGS. 1A and 2B.

The ratio of the second rotational speed N2 over the first rotational speed N1 of (1) is indicative of a cooling capacity required by the electric machine 200. For example, as the ratio of the second rotational speed N2 over the first rotational speed N1 increases, the cooling capacity required for the electric machine 200 increases. The first rotational speed N1 is greater than 2,000 RPMs and less than 20,000 RPMs. More specifically, the first rotational speed N1 is greater than 2,000 RPMs and less than 12,000 RPMs. The second rotational speed N2 is greater than 7,500 RPMs and less than 50,000 RPMs. More specifically, the second rotational speed N2 is greater than 7,500 RPMs and less than 35,000 RPMs. The second rotational speed N2 of the HP shaft 34, 136 is measured when the engine is operated at a maximum rated speed. Moreover, the second rotational speed N2 is measured at 100% capacity or at a maximum operating speed.

Values for various electric machine and electric machine cooling characteristics of a gas turbine engine defined by expressions (1)-(6) are set forth below in TABLE 1:

| **TABLE 1** | | |
|---|---|---|
| **Symbol** | **Description** | **Ranges appropriate for using in Expressions (1)-(5.2)** |
| *EMCF* | Electric machine cooling factor | 18 kW/kg to 281 kW/kg, such as 18 kW/kg to 125 kW/kg |
| *PD_{engine}* | Engine mass power density | 2 kW/kg to 786 kW/kg |
| *T* | Rated thrust | 4 kN to 600 kN, such as 4 kN to 120 kN |
| *M_{engine}* | Engine dry mass | 100 kg to 10,000 kg, such as 100 kg to 2,000 kg |
| *v_{fantip}* | Fan tip speed | 34 m/s to 524 m/s |
| *D_{fan}* | Fan diameter | 0.5 m to 5 m, such as 0.5 m to 2.5 m |
| *GR* | Gear ratio | 1 to 15, such as 1 to 5 |
| *PD_{EM}* | Electric machine power density | 5 kW/kg to 50 kW/kg, such as 5 kW/kg to 25 kW/kg |
| *P_{EM_max}* | Electric machine power rating | 200 kW or greater |
| *M_{EM}* | Electric machine dry mass | 4 kg to 1,000 kg, such as 4 kg to 200 kg |
| *N*1 | First rotational speed | 2,000 RPMs to 20,000 RPMs, such as 2,000 RPMs to 12,000 RPMs |
| *N*2 | Second rotational speed | 7,500 RPMs to 50,000 RPMs, such as 7,500 RPMs to 35,000 RPMs |
| *f_{coolant}* | Coolant supply factor | 0.1 to 1, such as 0.1 to 0.8 |
| *Vₚᵤₘₚ* | Coolant pump volume | 0 m³ to 25 m³ |
| *V_{EM}* | Electric machine volume | 0.0012 m³ to 15 m³ |
| *f_{EM_location}* | Electric machine mounting location factor | 1 to 1.6, such as 1 to 1.3 |
| *L_{EMlocation}* | Electric machine mounting location | 0.2 m to 15 m |
| *L_{engine}* | Engine length | 1 m to 10m |

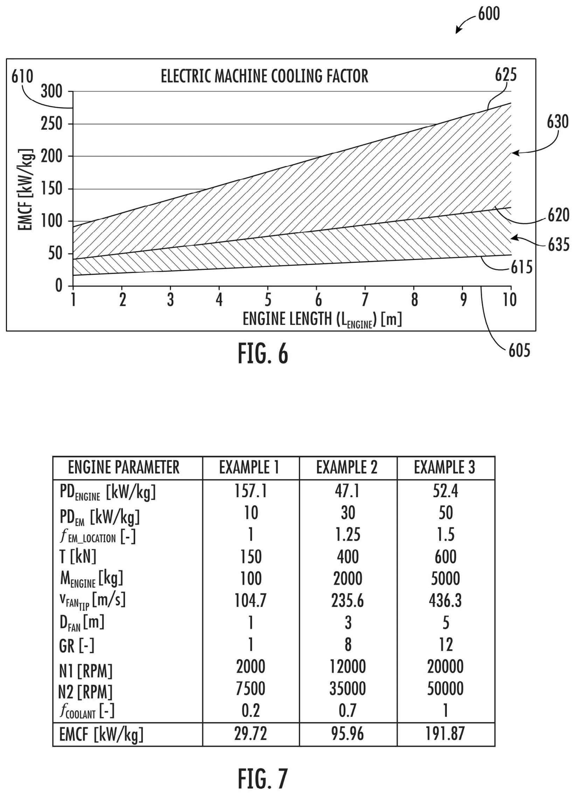

FIG. 6 provides a graph 600 depicting the electric machine cooling factor EMCF as a function of the engine length L_{engine}. For example, the graph 600 provides the engine length L_{engine} on the X-axis 605 and the electric machine cooling factor EMCF on the Y-axis 610. The graph 600 includes a first line 615 indicating a relationship between the engine length L_{engine} and the electric machine cooling factor EMCF. The graph 600 includes a second line 620 indicating a relationship between the engine length L_{engine} and the electric machine cooling factor EMCF. The graph 600 also includes a third line 625 indicating a relationship between the engine length L_{engine} and the electric machine cooling factor EMCF.

Moreover, the graph 600 provides a first range 630 between the first line 615 and the third line 625. In the first range 630, the engine length L_{engine} is greater than or equal to 1 meter and less than or equal to 10 meters and the electric machine cooling factor EMCF is greater than or equal to 18 kW/kg and less than or equal to 264 kW/kg. Additionally, the graph provides a second range 635 between the first line 615 and the second line 620. For example, in the second range 635, the engine length L_{engine} is greater than or equal to 1 meter and less than or equal to 10 meters and the electric machine cooling factor EMCF is greater than or equal to 18 kW/kg and less than or equal to 125 kW/kg.

With reference to FIG. 7, various example gas turbine engines having an electric machine and electric machine cooling system are provided below:

EXAMPLE 1: In a first example, a gas turbine engine includes an electric machine cooling system including an electric machine. The electric machine cooling system is arranged such that rated thrust T is 150 kN, the engine dry mass M_{engine} is 100 kg, and the fan tip speed v_{fan_tip} is 104.7 m/s, which results in an engine mass power density PD_{engine} of 157.1 kW/kg. The fan tip speed v_{fan_tip} is based on the gas turbine engine having a fan diameter D_{fan} of 1 meter and a gear ratio GR of 1. The electric machine power density PD_{EM} is 10 kW/kg. The first rotational speed N1 is 2,000 RPMs and the second rotational speed N2 is 7,500 RPMs. The coolant supply factor f_{coolant} is 0.2. The electric machine mounting location factor f_{EM_location} is 1. Accordingly, the electric machine cooling factor EMCF is 29.72 kW/kg.

EXAMPLE 2: In a second example, a gas turbine engine includes an electric machine cooling system including an electric machine. The electric machine cooling system is arranged such that rated thrust T is 400 kN, the engine dry mass M_{engine} is 2,000 kg, and the fan tip speed v_{fan_tip} is 235.6 m/s, which results in an engine mass power density PD_{engine} of 47.1 kW/kg. The fan tip speed v_{fan_tip} is based on the gas turbine engine having a fan diameter D_{fan} of 3 meters and a gear ratio GR of 8. The electric machine power density PD_{EM} is 30 kW/kg. The first rotational speed N1 is 12,000 RPMs and the second rotational speed N2 is 35,500 RPMs. The coolant supply factor f_{coolant} is 0.7. The electric machine mounting location factor f_{EM_location} is 1.25. Accordingly, the electric machine cooling factor EMCF is 95.96 kW/kg.

EXAMPLE 3: In a second example, a gas turbine engine includes an electric machine cooling system including an electric machine. The electric machine cooling system is arranged such that rated thrust T is 600 kN, the engine dry mass M_{engine} is 5,000 kg, and the fan tip speed v_{fan_tip} is 436.3 m/s, which results in an engine mass power density PD_{engine} of 52.4 kW/kg. The fan tip speed v_{fan_tip} is based on the gas turbine engine having a fan diameter D_{fan} of 5 meters and a gear ratio GR of 12. The electric machine power density PD_{EM} is 50 kW/kg. The first rotational speed N1 is 20,000 RPMs and the second rotational speed N2 is 50,000 RPMs. The coolant supply factor f_{coolant} is 1. The electric machine mounting location factor f_{EM_location} is 1.5. Accordingly, the electric machine cooling factor EMCF is 191.87 kW/kg.

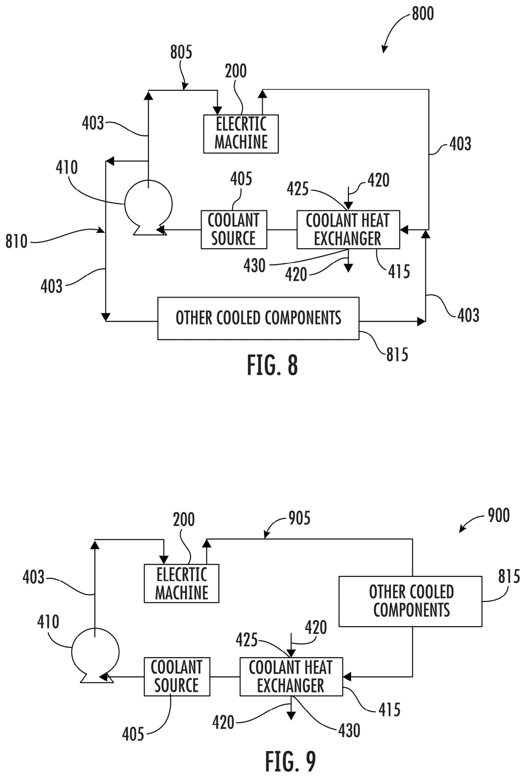

FIG. 8 is a schematic diagram of a cooling system 800 for the electric machine 200 of the exemplary gas turbine engine 10, 100 of FIGS. 1A-2B according to an example embodiment of the present disclosure. The cooling system 800 is similar or analogous to the cooling system 400 discussed with respect to FIG. 4. For example, the cooling system 800 includes the electric machine 200, the at least one coolant source 405, the coolant pump 410, and the one or more coolant heat exchangers 415.

The cooling system 800 includes a first cooling pathway 805 and a second cooling pathway 810. The first cooling pathway 805 is in fluid communication with the at least one coolant source 405, the coolant pump 410, the electric machine 200, and the one or more coolant heat exchangers 415. For example, the electric machine 200 is downstream of the at least one coolant source 405 and the one or more coolant heat exchangers 415 is downstream of the electric machine 200 and upstream of the at least one coolant source 405. The coolant pump 410 generates a flow of the coolant 403 along the first cooling pathway 805 from the at least one coolant source 405, to the electric machine 200, and to the one or more coolant heat exchangers 415 before returning to the at least one coolant source 405.

On the first cooling pathway 805, the one or more coolant heat exchangers 415 are configured to receive the heat sink fluid 420 and transfer heat from the coolant 403 flowing downstream of the electric machine 200 to the heat sink fluid 420. For example, the heat sink fluid 420 enters the one or more coolant heat exchangers 415 at the inlet 425 and exits the one or more coolant heat exchangers 415 at the outlet 430. The heat sink fluid 420 is configured to absorb heat from the coolant 403 that has absorbed heat from the electric machine 200. Accordingly, the heat sink fluid 420 exiting the one or more coolant heat exchangers 415 at the outlet 430 has a higher temperature than the heat sink fluid 420 entering the one or more coolant heat exchangers 415 at the inlet 425.

The first cooling pathway 805 and the second cooling pathway 810 are in parallel. The second cooling pathway 810 is in fluid communication with the at least one coolant source 405, the coolant pump 410, one or more cooled components 815, and the one or more coolant heat exchangers 415. For example, the one or more cooled components 815 is downstream of the at least one coolant source 405 and the one or more coolant heat exchangers 415 is downstream of the one or more cooled components 815 and upstream of the at least one coolant source 405. The one or more cooled components 815 include a gearbox, such as the gearbox 46, 155; power electronics, such as a power converter and a power distribution unit; or a combination thereof.

On the second cooling pathway 810, the coolant pump 410 generates a flow of the coolant 403 from the at least one coolant source 405, to the one or more cooled components 815, and to the one or more coolant heat exchangers 415 before returning to the at least one coolant source 405. The coolant 403 absorbs heat from the one or more cooled components 815. Downstream of the one or more cooled components 815, the one or more coolant heat exchangers 415 are configured to absorb heat from the coolant 403, which was been heated by the one or more cooled components 815. For example, the one or more coolant heat exchangers 415 receive the heat sink fluid 420 and transfer heat from the coolant 403 to the heat sink fluid 420.

FIG. 9 is a schematic diagram of a cooling system 900 for the electric machine 200 of the exemplary gas turbine engine 10, 100 of FIGS. 1A-2B according to an example embodiment of the present disclosure. The cooling system 900 is similar or analogous to the cooling system 400, 800 discussed with respect to FIGS. 4 and 8. For example, the cooling system 800 includes the electric machine 200, the at least one coolant source 405, the coolant pump 410, and the one or more coolant heat exchangers 415. The cooling system 900 also includes the one or more cooled components 815.

The cooling system 900 includes a coolant pathway 905 for supplying the coolant 403 to the electric machine 200, the one or more cooled components 815, and the one or more coolant heat exchangers 415. The coolant pump 410 generates a flow of the coolant through the coolant pathway 905 from the at least one coolant source 405, to the electric machine 200, to the one or more cooled components 815, and to the one or more coolant heat exchangers 415 before returning to the at least one coolant source 405. For example, the electric machine 200 is downstream of the at least one coolant source 405, the one or more cooled components 815 is downstream of the electric machine 200 and upstream of the one or more coolant heat exchangers 415, and the one or more coolant heat exchangers 415 are downstream of the one or more cooled components 815 and upstream of the at least one coolant source 405.

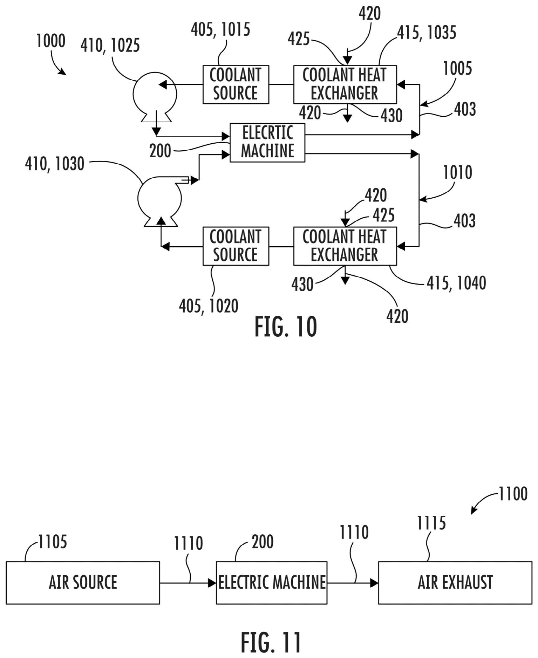

FIG. 10 is a schematic diagram of a cooling system 1000 for the electric machine 200 of the exemplary gas turbine engine 10, 100 of FIGS. 1A-2B according to an example embodiment of the present disclosure. The cooling system 1000 is similar or analogous to the cooling system 400, 800, 900 discussed with respect to FIGS. 4 and 8-9. For example, the cooling system 1000 includes the electric machine 200, the at least one coolant source 405, the coolant pump 410, and the one or more coolant heat exchangers 415.

In at least one example embodiment, the at least one coolant source 405 includes a first coolant source 1015 and a second coolant source 1020, the coolant pump 410 includes a first coolant pump 1025 and a second coolant pump 1030, and the one or more coolant heat exchangers 415 include a first coolant heat exchanger 1035 and a second coolant heat exchanger 1040. The coolant 403 stored in the second coolant source 1020 is the same as or different than the coolant 403 stored in the first coolant source 1015. Moreover, the cooling system 1000 includes a first coolant pathway 1005 and a second coolant pathway 1010. The first coolant pathway 1005 includes the electric machine 200, the first coolant source 1015, the first coolant pump 1025, and the first coolant heat exchanger 1035. For example, the electric machine 200 is downstream of the first coolant source 1015 and the first coolant heat exchanger 1035 is downstream of the electric machine 200 and upstream of the first coolant source 1015. The first coolant pump 1025 generates a flow of the coolant 403 along the first coolant pathway 1005 from the first coolant source 1015, to the electric machine 200, and to the first coolant heat exchanger 1035 before returning to the first coolant source 1015.

The second coolant pathway 1010 includes the electric machine 200, the second coolant source 1020, and the second coolant heat exchanger 1040. For example, the electric machine 200 is downstream of the second coolant source 1020, and the second coolant heat exchanger 1040 is downstream of the electric machine 200 and upstream of the second coolant source 1020. The second coolant pump 1030 generates a flow of the coolant 403 along the second coolant pathway 1010 from the second coolant source 1020, to the electric machine 200, and to the second coolant heat exchanger 1040 before returning to the second coolant source 1020.

FIG. 11 is a schematic diagram of a cooling system 1100 for the electric machine 200 of the exemplary gas turbine engine 10, 100 of FIGS. 1A-2B according to an example embodiment of the present disclosure.

The cooling system 1100 includes a supply of air, such as an air source 1105, in fluid communication with the electric machine 200. In at least one example embodiment, the air source 1105 includes the fan 38, 152; the compressor section, the bypass airflow passage 56, the fan duct 172, or a combination thereof of the exemplary gas turbine engine 10, 100. The air source 1105 is configured to supply a flow of air 1110 to the electric machine 200 for cooling the electric machine 200. For example, the flow of air 1110 absorbs heat from the electric machine 200. The heated flow of air 1110 from the electric machine 200 is supplied to an air exhaust 1115 downstream of the electric machine 200. For example, the air exhaust 1115 includes the combustion section 26, the combustor 130, the jet exhaust nozzle section 32, the turbomachine exhaust nozzle 140, or a combination thereof of the exemplary gas turbine engine 10, 100.

Moreover, the cooling system 1100 does not include a coolant pump. Accordingly, the coolant pump volume Vₚᵤₘₚ, as discussed with respect to (5) above, is equal to zero (0) in this example embodiment.

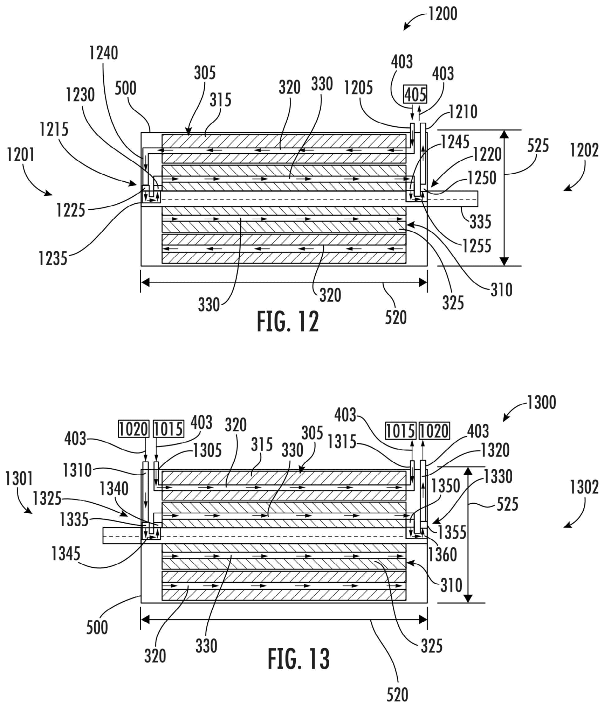

FIG. 12 is a side cross-sectional view of an electric machine 1200 according to an example embodiment of the present disclosure. The electric machine 1200 is similar or analogous to the exemplary electric machine 200 discussed with respect to FIGS. 3 and 5. For example, the electric machine 1200 depicted in FIG. 12 includes the casing 500 with the stator assembly 305, the rotor assembly 310 and the shaft 335 disposed within the casing 500. Moreover, the electric machine 1200 is incorporated into the gas turbine engine 10, 100 in place of the electric machine 200.

The electric machine 1200 extends between a first end 1201 and a second end 1202 opposite the first end 1201. The electric machine 1200 defines a fluid inlet 1205 for receiving a flow of the coolant 403 and a fluid outlet 1210 through which the coolant 403 exits the electric machine 1200. For example, the fluid inlet 1205 receives the flow of the coolant 403 from the at least one coolant source 405, as discussed with respect to FIGS. 4, 8, and 9. As shown in FIG. 12, the fluid inlet 1205 and the fluid outlet 1210 are adjacent the second end 1202 of the electric machine 1200. However, it should be understood that one or both of the fluid inlet 1205 and the fluid outlet 1210 is positioned adjacent the first end 1201 or the second end 1202.

The electric machine 200 includes a first rotary coupling 1215 adjacent the first end 1201 and a second rotary coupling 1220 adjacent the second end 1202. The first rotary coupling 1215 and the second rotary coupling 1220 are fluid connectors disposed in the shaft 335 for fluidly coupling the plurality of stator slots 320 and the plurality of rotor slots 330 to the fluid inlet 1205 and the fluid outlet 1210 as the shaft 335 and the rotor core 325 rotates. The first rotary coupling 1215 includes an inlet 1225, an outlet 1230, and a fluid channel 1235 in fluid communication between the inlet 1225 and the outlet 1230. At least a portion of the shaft 335 defines the fluid channel 1235.

The coolant 403 flows into the fluid inlet 1205 and through at least one of the stator slots 320 in fluid communication with the fluid inlet 1205. As the shaft 335 rotates, the inlet 1225 of the first rotary coupling 1215 rotates into engagement with a channel 1240 fluidly coupling the inlet 1225 with one of the stator slots 320 and the outlet 1230 rotates into fluid engagement with one of the rotor slots 330. Accordingly, the coolant 403 flows from the fluid inlet 1205 and through at least one of the stator slots 320, the channel 1240, the inlet 1225, the fluid channel 1235, and the outlet 1230 to one of the rotor slots 330.

The second rotary coupling 1220 includes an inlet 1245, an outlet 1250, and a fluid channel 1255 fluidly coupled between the inlet 1245 and the outlet 1250. The outlet 1250 is also in fluid communication with the fluid outlet 1210. As the shaft 335 rotates, the inlet 1245 of the second rotary coupling 1220 rotates into fluid engagement with one of the rotor slots 330 and the outlet 1250 rotated into fluid engagement with the fluid outlet 1210. The coolant 403 flows from the rotor slots 330 and through the inlet 1245, the fluid channel 1255, and the outlet 1250 to the fluid outlet 1210. Accordingly, the first rotary coupling 1215 and the second rotary coupling 1220 fluidly couple the fluid inlet 1205 and the fluid outlet 1210 to each of the stator slots 320 and each of the rotor slots 330 as the shaft 335 rotates for supplying the coolant 403 to each of the stator slots 320 and each of the rotor slots 330 of the electric machine 1200 for cooling in a serial flow configuration.

FIG. 13 is a side cross-sectional view of an electric machine 1300 according to an example embodiment of the present disclosure. The electric machine 1300 is similar or analogous to the exemplary electric machine 200, 1200 discussed with respect to FIGS. 3, 5, and 12. For example, the electric machine 1300 depicted in FIG. 13 includes the casing 500 with the stator assembly 305, the rotor assembly 310 and the shaft 335 disposed within the casing 500. Moreover, the electric machine 1300 is incorporated into the gas turbine engine 10, 100 in place of the electric machine 200.

The electric machine 1300 extends between a first end 1301 and a second end 1302 opposite the first end 1301. The electric machine 1300 defines a first fluid inlet 1305, a second fluid inlet 1310, a first fluid outlet 1315 in fluid communication with the first fluid inlet 1305, and a second fluid outlet 1320 in fluid communication with the second fluid inlet 1310. The first fluid inlet 1305 and the second fluid inlet 1310 are adjacent the first end 1301 of the electric machine 1300 and the first fluid outlet 1315 and the second fluid outlet 1320 are adjacent the second end 1302 of the electric machine 1300. However, it should also be understood that the first fluid inlet 1305, the second fluid inlet 1310, the first fluid outlet 1315, and the second fluid outlet 1320 are positioned adjacent the first end 1301 or the second end 1302 in other example embodiments to enable either co-flow or counterflow arrangement of same or different coolants within the electric machine 1300.

The first fluid inlet 1305 is configured to receive a flow of the coolant 403 from a first coolant source, such as the first coolant source 1015 discussed with respect to FIG. 10, and the second fluid inlet 1310 is configured to receive a flow of the coolant 403 from a second coolant source, such as the second coolant source 1020 discussed with respect to FIG. 10. The first fluid inlet 1305 and the first fluid outlet 1315 are in fluid communication with the stator slots 320 of the stator assembly 305. For example, the coolant 403 is supplied from the first coolant source 1015 to the stator slots 320 via the first fluid inlet 1305 and returned to the first coolant source 1015 via the first fluid outlet 1315.

The electric machine 1300 includes a first rotary coupling 1325 and a second rotary coupling 1330. The first rotary coupling 1325 and the second rotary coupling 1330 are fluid connectors disposed in the shaft 335 for fluidly coupling the plurality of stator slots 320 and the plurality of rotor slots 330 to the second fluid inlet 1310 and the second fluid outlet 1320 as the shaft 335 and the rotor core 325 rotates. The first rotary coupling 1325 includes an inlet 1335, an outlet 1340, and a fluid channel 1345 in fluid communication between the inlet 1335 and the outlet 1340. At least a portion of the shaft 335 defines the fluid channel 1345.

The coolant 403 flows into the second fluid inlet 1310 from the second coolant source 1020 and to the inlet 1335. The inlet 1335 provides the coolant 403 to the rotor slots 330 via the fluid channel 1345 and the outlet 1340. The coolant flows through the rotor slots 330 to the second rotary coupling 1330.

The second rotary coupling 1330 includes an inlet 1350, an outlet 1355, and a fluid channel 1360 in fluid communication between the inlet 1350 and the outlet 1355. The inlet 1350 is in fluid communication with the rotor slots 330 and the outlet 1355 is in fluid communication with the second fluid outlet 1320. The coolant 403 flows from the rotor slots 330 and through the inlet 1350, the fluid channel 1360, and the outlet 1355 before returning to the second coolant source 1020 via the second fluid outlet 1320. As the shaft 335 rotates, the inlet 1335 and the outlet 1340 of the first rotary coupling 1325 and the inlet 1350 and the outlet 1355 of the second rotary coupling 1330 are rotated into fluid communication with one of the rotor slots 330. Accordingly, the first rotary coupling 1325 and the second rotary coupling 1330 fluidly couple the second fluid inlet 1310 and the second fluid outlet 1320 to each of the rotor slots 330 as the shaft 335 rotates for supplying the coolant 403 from the second coolant source 1020 to each of the rotor slots 330 of the electric machine 1300 for cooling in a serial flow configuration.

While the electric machine 1300 depicted in FIG. 13 shows the coolant 403 flowing through the stator slots 320 and the rotor slots 330 in the same direction, it should be understood that the coolant 403 flows through the stator slots 320 and the rotor slots 330 in opposing direction in other example embodiments. Moreover, in other example embodiments not illustrated, the cooling system 400, 800, 900, 1000, 1100 in FIGS. 4 and 8-11 is used for cooling only the stator assembly or only the rotor assembly, or other subcomponents of the electric machine such as end-windings, air-gap, and the shaft.

Further aspects are provided by the subject matter of the following clauses:
A gas turbine engine, comprising: a turbomachine comprising a compressor section, a combustion section, and a turbine section arranged in serial flow order along a longitudinal centerline axis; a low pressure shaft coupled to a portion of the compressor section and the turbine section, the low pressure shaft defining a first rotational speed (N1) measured in rotations per minute (RPMs); a high pressure shaft coupled to another portion of the compressor section and the turbine section, the high pressure shaft defining a second rotational speed (N2) measured in RPMs; an electric machine operably coupled to the low pressure shaft or the high pressure shaft, the electric machine defining an electric machine power density (PD_{EM}) measured in W/kg and an electric machine mounting location factor (f_{EM_location}); and a cooling system thermally coupled to the electric machine, the cooling system defining a coolant supply factor (f_{coolant}); wherein the gas turbine engine defines an engine mass power density (PD_{engine}) measured in W/kg; wherein the electric machine defines an electric machine cooling factor (EMCF), the EMCF equal to: ${\left({PD}_{engine}\times {PD}_{EM}\right)}^{\frac{1}{2}} \times \frac{N 2}{N 1} \times {f}_{coolant} \times {f}_{EM _ location}$; and wherein the electric machine cooling factor (EMCF) is greater than 18 kW/kg and less than 281 kW/kg.

The gas turbine engine of any preceding clause, wherein the EMCF is greater than 18 kW/kg and less than 125 kW/kg.

The gas turbine engine of any preceding clause, wherein: the gas turbine engine further comprises a fan rotatable by the turbomachine; the gas turbine engine defines a rated thrust (T) measured in kilo-Newtons (kN) and an engine dry mass (M_{engine}) measured in kg; the fan defines a fan tip speed (v_{fan_tip}) measured in m/s; and the engine mass power density (PD_{engine}) is equal to: $\frac{T}{{M}_{engine}} \times {v}_{fan _ tip}$.

The gas turbine engine of any preceding clause, wherein the rated thrust (T) is greater than 4 kN and less than 600 kN.

The gas turbine engine of any preceding clause, wherein the rated thrust (T) is greater than 4 kN and less than 120 kN.

The gas turbine engine of any preceding clause, wherein the engine dry mass (M_{engine}) is greater than 100 kg and less than 10,000 kg.

The gas turbine engine of any preceding clause, wherein the engine dry mass (M_{engine}) is greater than 100 kg and less than 2,000 kg.

The gas turbine engine of any preceding clause, wherein: the fan defines a fan diameter (D) measured in meters (m); the gas turbine engine further comprises a gearbox including an input coupled to the turbine section of the turbomachine and an output coupled to the fan, the gearbox defining a gear ratio (GR) defined by a ratio of a first rotational speed of the input and a second rotational speed of the output; and the fan tip speed (v_{fan_tip}) is equal to: $π \times \frac{{D}_{fan}}{GR} \times \frac{N 1}{60}$.

The gas turbine engine of any preceding clause, wherein the fan diameter (D) is greater than 0.5 m and less than 5 m.

The gas turbine engine of any preceding clause, wherein the fan diameter (D) is greater than 0.5 m and less than 2.5 m.

The gas turbine engine of any preceding clause, wherein the gear ratio (GR) is greater than 1 and less than 15.

The gas turbine engine of any preceding clause, wherein the gear ratio (GR) is greater than 1 and less than 5.

The gas turbine engine of any preceding clause, wherein the electric machine power density (PD_{EM}) is greater than 5 kW/kg and less than 50 kW/kg.

The gas turbine engine of any preceding clause, wherein the electric machine power density (PD_{EM}) is greater than 5 kW/kg and less than 25 kW/kg.

The gas turbine engine of any preceding clause, wherein the first rotational speed (N1) is greater than 2,000 RPMs and less than 20,000 RPMs.

The gas turbine engine of any preceding clause, wherein the first rotational speed (N1) is greater than 2,000 RPMs and less than 12,000 RPMs.

The gas turbine engine of any preceding clause, wherein the second rotational speed (N2) is greater than 7,500 RPMs and less than 50,000 RPMs.

The gas turbine engine of any preceding clause, wherein the second rotational speed (N2) is greater than 7,500 RPMs and less than 35,000 RPMs.

The gas turbine engine of any preceding clause, wherein the electric machine defines a maximum electric machine power rating (P_{EM_max}) measured in kW and an electric machine dry mass (M_{EM}) measured in kg, and wherein the electric machine power density (PD_{EM}) is equal to: $\frac{{P}_{EM _ max}}{{M}_{EM}}$.

The gas turbine engine of any preceding clause, wherein the maximum electric machine power rating (P_{EM_max}) is greater than or equal to 200 kW.

The gas turbine engine of any preceding clause, wherein the electric machine dry mass (M_{EM}) is greater than or equal to 4 kg and less than or equal to 1,000 kg.

The gas turbine engine of any preceding clause, wherein the electric machine dry mass (M_{EM}) is greater than or equal to 4 kg and less than or equal to 200 kg.

The gas turbine engine of any preceding clause, wherein:
the cooling system comprises a coolant pump for supplying the coolant to the electric machine, the coolant pump defining a coolant pump volume (Vₚᵤₘₚ) measured in m³;
the electric machine defines an electric machine volume (V_{EM}) measured in m³; and
the coolant supply factor (f_{coolant}) is equal to: $1 - \frac{{V}_{pump}}{{V}_{EM} + {V}_{pump}} .$

The gas turbine engine of any preceding clause, wherein the coolant supply factor (f_{coolant}) is greater than 0.1 and less than 1.

The gas turbine engine of any preceding clause, wherein the coolant supply factor (f_{coolant}) is greater than 0.1 and less than 0.8.

The gas turbine engine of any preceding clause, wherein: the gas turbine engine defines an engine length (L_{engine}) defined by a distance extending parallel to the longitudinal centerline axis between a forward end of the gas turbine engine and an aft end of an exhaust nozzle of the turbomachine measured in meters; an electric machine mounting location (L_{EM_location}) is defined by a distance extending parallel to the longitudinal centerline axis between the forward end of the gas turbine engine and a center of the electric machine measured in meters; the electric machine defines an electric machine length (L_{EM}) measured in meters and an electric machine diameter (D_{EM}) measured in meters; and the electric machine mounting location factor (f_{EM_location}) is equal to: $1 + \frac{{L}_{EM _ location}}{{L}_{EM _ location} + {L}_{engine}}$.

The gas turbine engine of any preceding clause, wherein the electric machine mounting location factor (f_{EM_location}) is greater than 1 and less than 1.6.

The gas turbine engine of any preceding clause, wherein the electric machine mounting location factor (f_{EM_location}) is greater than 1 and less than 1.3.

The gas turbine engine of any preceding clause, wherein the electric machine defines a voltage rating greater than or equal to 800 volts (V).

The gas turbine engine of any preceding clause, wherein the cooling system comprises: at least one coolant source; a coolant pump for providing a supply of a coolant in the coolant source to the electric machine; and one or more coolant heat exchangers disposed downstream of the electric machine and upstream of the coolant source, the one or more coolant heat exchangers configured to transfer thermal energy from coolant to a heat sink fluid.

The gas turbine engine of any preceding clause, wherein the coolant comprises water-glycol, oil, water, supercritical carbon dioxide, liquid nitrogen, liquid helium, liquid hydrogen, air, or fuel, or a combination thereof.

The gas turbine engine of any preceding clause, wherein the heat sink fluid comprises fuel, liquid hydrogen, or air.

The gas turbine engine of any preceding clause, wherein the cooling system further comprises one or more cooled components disposed downstream of the at least one coolant source and upstream of the one or more coolant heat exchangers, wherein the one or more cooled components comprise a gearbox, power electronics, or a combination thereof.

The gas turbine engine of any preceding clause, wherein: the cooling system comprises a first coolant pathway in fluid communication with the at least one coolant source, the coolant pump, and the one or more coolant heat exchangers; and a second coolant pathway in fluid communication with the at least one coolant source, one or more cooled components, and the one or more coolant heat exchangers, the one or more cooled components disposed downstream of the at least one coolant source and upstream of the one or more coolant heat exchangers, wherein the one or more cooled components comprise a gearbox, power electronics, or a combination thereof.

The gas turbine engine of any preceding clause, wherein the cooling system comprises: a first coolant pathway including a first coolant source for storing a first coolant, a first coolant pump for supplying the first coolant to the electric machine, and a first coolant heat exchanger downstream of the electric machine and upstream of the first coolant source; and a second coolant pathway including a second coolant source for storing a second coolant, a second coolant pump for supplying the second coolant to the electric machine, and a second coolant heat exchanger downstream of the electric machine and upstream of the second coolant source.

The gas turbine engine of any preceding clause, wherein: the coolant comprises a supply of air provided to the electric machine from a fan rotatable by the turbomachine, the compressor section, a bypass passage, or a combination thereof; and wherein the coolant is exhausted from the electric machine to the combustion section, an exhaust nozzle, or both the combustion section and the exhaust nozzle.

The gas turbine engine of any preceding clause, wherein the electric machine comprises: a casing; a shaft at least partially disposed in the casing, the shaft operably coupled to and rotatable with the low pressure shaft or the high pressure shaft; a rotor disposed in the casing and coupled to the shaft, the rotor rotatable with the shaft; and a stator disposed in the casing and circumscribing the rotor.

The gas turbine engine of any preceding clause, wherein: the casing defines a fluid chamber surrounding the stator, the rotor, and the shaft; and the casing further defines a fluid inlet and a fluid outlet fluidly coupled to the fluid chamber, the coolant is configured to enter the fluid chamber through the fluid inlet and leave the fluid chamber through the fluid outlet.

The gas turbine engine of any preceding clause, wherein: the casing defines a fluid inlet and a fluid outlet; the rotor defines a plurality of rotor channels extending between a first end and a second end opposite the first end of the electric machine;
the stator defines a plurality of stator channels extending between the first end and the second end; and the electric machine further comprises a rotary coupling fluidly coupled to the plurality of rotor channels and the plurality of stator channels.

The gas turbine engine of any preceding clause, wherein the rotary coupling is disposed in the shaft.

The gas turbine engine of any preceding clause, rotary coupling is configured to rotate into engagement with the fluid inlet for receiving the coolant and rotate out of engagement with the fluid inlet to cease receiving the coolant.

The gas turbine engine of any preceding clause, wherein: the casing defines a first fluid inlet and a first fluid outlet in fluid communication with a first coolant source and a second fluid inlet and a second fluid outlet in fluid communication a second coolant source; the stator defines a plurality of stator channels extending between a first end and a second end opposite the first end of the electric machine, the plurality of stator channels in fluid communication with the first fluid inlet and the first fluid outlet; the rotor defines a plurality of rotor channels extending between the first end and the second end, the plurality of rotor channels in fluid communication with the second fluid inlet and the second fluid outlet; and the electric machine further comprises a rotary coupling fluidly coupling the plurality of rotor channels with the second fluid inlet and the second fluid outlet.

The gas turbine engine of any preceding clause, wherein the gas turbine engine comprises an unducted engine.

The gas turbine engine of any preceding clause, wherein the gas turbine engine comprises a turbofan engine.

The gas turbine engine of any preceding clause, wherein: the cooling system comprises a coolant pump in fluid communication with the electric machine, the coolant pump defining a coolant pump volume (Vₚᵤₘₚ) measured in m³; the electric machine defines an electric machine volume (V_{EM}) measured in m³; the coolant supply factor (f_{coolant}) is equal to: $1 - \frac{{V}_{pump}}{{V}_{EM} + {V}_{pump}}$; and the coolant supply factor (f_{coolant}) is greater than 0.1 and less than 1.

The gas turbine engine of any preceding clause, wherein the cooling system comprises: at least one coolant source; a coolant pump in fluid communication with the coolant source and the electric machine; and one or more coolant heat exchangers disposed downstream of the electric machine and upstream of the coolant source, the one or more coolant heat exchangers configured to transfer thermal energy from coolant to a heat sink fluid; wherein the coolant comprises water-glycol, oil, water, supercritical carbon dioxide, liquid nitrogen, liquid helium, liquid hydrogen, air, fuel, or a combination thereof; and wherein the heat sink fluid comprises fuel, liquid hydrogen, or air.

The gas turbine engine of any preceding clause, wherein the cooling system comprises: a first coolant pathway including a first coolant source for storing a first coolant, a first coolant pump in fluid communication with the electric machine and configured to supply the first coolant to the electric machine, and a first coolant heat exchanger downstream of the electric machine and upstream of the first coolant source; and a second coolant pathway including a second coolant source for storing a second coolant, a second coolant pump in fluid communication with the electric machine and configured to supply the second coolant to the electric machine, and a second coolant heat exchanger downstream of the electric machine and upstream of the second coolant source.

The gas turbine engine of any preceding clause, wherein: the cooling system is configured to supply a coolant to the electric machine; the coolant comprises a supply of air provided to the electric machine from a fan rotatable by the turbomachine, the compressor section, a bypass passage, or a combination thereof; and the coolant is exhausted from the electric machine to the combustion section, an exhaust nozzle, or both the combustion section and the exhaust nozzle.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A gas turbine engine, comprising:
a turbomachine comprising a compressor section, a combustion section, and a turbine section arranged in serial flow order along a longitudinal centerline axis;
a low pressure shaft coupled to a portion of the compressor section and the turbine section, the low pressure shaft defining a first rotational speed (N1) measured in rotations per minute (RPMs);
a high pressure shaft coupled to another portion of the compressor section and the turbine section, the high pressure shaft defining a second rotational speed (N2) measured in RPMs;
an electric machine operably coupled to the low pressure shaft or the high pressure shaft, the electric machine defining an electric machine power density (PD_{EM}) measured in W/kg and an electric machine mounting location factor (f_{EM_location}); and
a cooling system thermally coupled to the electric machine, the cooling system defining a coolant supply factor (f_{coolant});
wherein the gas turbine engine defines an engine mass power density (PD_{engine}) measured in W/kg;
wherein the electric machine defines an electric machine cooling factor (EMCF), the EMCF equal to: ${\left({PD}_{engine}\times {PD}_{EM}\right)}^{\frac{1}{2}} \times \frac{N 2}{N 1} \times {f}_{coolant} \times {f}_{{EM}_{location}} ;$ and
wherein the electric machine cooling factor (EMCF) is greater than 18 kW/kg and less than 281 kW/kg.

2. The gas turbine engine of claim 1, wherein:
the gas turbine engine further comprises a fan rotatable by the turbomachine;
the gas turbine engine defines a rated thrust (T) measured in kilo-Newtons (kN) and an engine dry mass (M_{engine}) measured in kg;
the fan defines a fan tip speed (v_{fan_tip}) measured in m/s;
the engine mass power density (PD_{engine}) is equal to: $\frac{T}{{M}_{engine}} \times {v}_{{fan}_{tip}} ;$ and
the rated thrust (T) is greater than 4 kN and less than 600 kN.

3. The gas turbine engine of claim 2, wherein:
the fan defines a fan diameter (D) measured in meters (m);
the gas turbine engine further comprises a gearbox including an input coupled to the turbine section of the turbomachine and an output coupled to the fan, the gearbox defining a gear ratio (GR) defined by a ratio of a first rotational speed of the input and a second rotational speed of the output;
the fan tip speed (v_{fan_tip}) is equal to: $π \times \frac{{D}_{fan}}{GR} \times \frac{N 1}{60} ;$
the fan diameter (D) is greater than 0.5 m and less than 5 m; and
the gear ratio (GR) is greater than 1 and less than 15.

4. The gas turbine engine of any preceding claim, wherein:
the electric machine power density (PD_{EM}) is greater than 5 kW/kg and less than 50 kW/kg;
the first rotational speed (N1) is greater than 2,000 RPMs and less than 20,000 RPMs; and
the second rotational speed (N2) is greater than 7,500 RPMs and less than 50,000 RPMs.

5. The gas turbine engine of any preceding claim, wherein the electric machine defines a maximum electric machine power rating (P_{EM_max}) measured in kW and an electric machine dry mass (M_{EM}) measured in kg, and wherein the electric machine power density (PD_{EM}) is equal to: $\frac{{P}_{EM _ max}}{{M}_{EM}} ;$ and
where the maximum electric machine power rating (P_{EM_max}) is greater than or equal to 200 kW; and/or wherein:
the cooling system comprises a coolant pump in fluid communication with the electric machine, the coolant pump defining a coolant pump volume (Vₚᵤₘₚ) measured in m³;
the electric machine defines an electric machine volume (V_{EM}) measured in m³;
the coolant supply factor (f_{coolant}) is equal to: $1 - \frac{{V}_{pump}}{{V}_{EM} + {V}_{pump}} ;$ and
the coolant supply factor (f_{coolant}) is greater than 0.1 and less than 1; and/or
wherein:
the gas turbine engine defines an engine length (L_{engine}) defined by a distance extending parallel to the longitudinal centerline axis between a forward end of the gas turbine engine and an aft end of an exhaust nozzle of the turbomachine measured in meters;
an electric machine mounting location (L_{EM_location}) is defined by a distance extending parallel to the longitudinal centerline axis between the forward end of the gas turbine engine and a center of the electric machine measured in meters;
the electric machine defines an electric machine length (L_{EM}) measured in meters and an electric machine diameter (D_{EM}) measured in meters;
the electric machine mounting location factor (f_{EM_location}) is equal to: $1 + \frac{{L}_{{EM}_{location}}}{{L}_{{EM}_{location}} + {L}_{engine}} ;$ and
the electric machine mounting location factor (f_{EM_location}) is greater than 1 and less than 1.6; and/or
wherein the electric machine defines a voltage rating greater than or equal to 800 volts (V).

6. The gas turbine engine of any preceding claim, wherein the cooling system comprises:
at least one coolant source;
a coolant pump in fluid communication with the coolant source and the electric machine; and
one or more coolant heat exchangers disposed downstream of the electric machine and upstream of the coolant source, the one or more coolant heat exchangers configured to transfer thermal energy from coolant to a heat sink fluid;
wherein the coolant comprises water-glycol, oil, water, supercritical carbon dioxide, liquid nitrogen, liquid helium, liquid hydrogen, air, fuel, or a combination thereof; and
wherein the heat sink fluid comprises fuel, liquid hydrogen, or air.

7. The gas turbine engine of claim 6, wherein the cooling system further comprises one or more cooled components disposed downstream of the at least one coolant source and upstream of the one or more coolant heat exchangers, wherein the one or more cooled components comprise a gearbox, power electronics, or a combination thereof; and/or
wherein:
the cooling system comprises a first coolant pathway in fluid communication with the at least one coolant source, the coolant pump, and the one or more coolant heat exchangers; and
a second coolant pathway in fluid communication with the at least one coolant source, one or more cooled components, and the one or more coolant heat exchangers, the one or more cooled components disposed downstream of the at least one coolant source and upstream of the one or more coolant heat exchangers, wherein the one or more cooled components comprise a gearbox, power electronics, or a combination thereof.

8. The gas turbine engine of any preceding claim, wherein the cooling system comprises:
a first coolant pathway including a first coolant source for storing a first coolant, a first coolant pump in fluid communication with the electric machine and configured to supply the first coolant to the electric machine, and a first coolant heat exchanger downstream of the electric machine and upstream of the first coolant source; and
a second coolant pathway including a second coolant source for storing a second coolant, a second coolant pump in fluid communication with the electric machine and configured to supply the second coolant to the electric machine, and a second coolant heat exchanger downstream of the electric machine and upstream of the second coolant source.

9. The gas turbine engine of any preceding claim, wherein:
the cooling system is configured to supply a coolant to the electric machine;
the coolant comprises a supply of air provided to the electric machine from a fan rotatable by the turbomachine, the compressor section, a bypass passage, or a combination thereof; and
the coolant is exhausted from the electric machine to the combustion section, an exhaust nozzle, or both the combustion section and the exhaust nozzle.

10. The gas turbine engine of any preceding claim, wherein the electric machine comprises:
a casing;
a shaft at least partially disposed in the casing, the shaft operably coupled to and rotatable with the low pressure shaft or the high pressure shaft;
a rotor disposed in the casing and coupled to the shaft, the rotor rotatable with the shaft; and
a stator disposed in the casing and circumscribing the rotor.

11. The gas turbine engine of claim 10, wherein:
the casing defines a fluid chamber surrounding the stator, the rotor, and the shaft; and
the casing further defines a fluid inlet and a fluid outlet fluidly coupled to the fluid chamber.

12. The gas turbine engine of claim 10, wherein:
the casing defines a fluid inlet and a fluid outlet;
the rotor defines a plurality of rotor channels extending between a first end and a second end opposite the first end of the electric machine;
the stator defines a plurality of stator channels extending between the first end and the second end; and
the electric machine further comprises a rotary coupling fluidly coupled to the plurality of rotor channels and the plurality of stator channels;
optionally wherein the rotary coupling is disposed in the shaft; and wherein the rotary coupling is configured to rotate into engagement with the fluid inlet for receiving a coolant and rotate out of engagement with the fluid inlet to cease receiving the coolant.

13. The gas turbine engine of claim 10, wherein:
the casing defines a first fluid inlet and a first fluid outlet in fluid communication with a first coolant source and a second fluid inlet and a second fluid outlet in fluid communication a second coolant source;
the stator defines a plurality of stator channels extending between a first end and a second end opposite the first end of the electric machine, the plurality of stator channels in fluid communication with the first fluid inlet and the first fluid outlet;
the rotor defines a plurality of rotor channels extending between the first end and the second end, the plurality of rotor channels in fluid communication with the second fluid inlet and the second fluid outlet; and
the electric machine further comprises a rotary coupling fluidly coupling the plurality of rotor channels with the second fluid inlet and the second fluid outlet.

14. The gas turbine engine of any preceding claim, wherein the gas turbine engine comprises an unducted engine.

15. The gas turbine engine of any preceding claim, wherein the gas turbine engine comprises a turbofan engine.
